# EUROPEAN PATENT SPECIFICATION

(11) **EP 1 430 372 B1**
(45) Date of publication and mention of the grant of the patent: **09.01.2008**
(21) Application number: 01977257.3
(22) Date of filing: 28.09.2001
(51) Int. Cl.: G06F 1/00

(54) **BIOMETRIC AUTHENTICATION**
BIOMETRISCHE AUTHENTIFIZIERUNG
AUTHENTIFICATION BIOMETRIQUE

(43) Date of publication of application: 23.06.2004
(73) Proprietor: Saflink Corporation, Bellevue, WA 98005 (US)
(72) Inventor: MERCREDI, Dwayne, Sherwood Park, Alberta T8H 1T2 (CA); FREY, Rod, Edmonton, Alberta T6E 2R3 (CA); JENSEN, Gregory,, Redmond, WA 98053 (US)
(74) Representative: Findlay, Alice Rosemary
(86) International application number: PCT/US2001/030458
(87) International publication number: WO 2003/029938

(56) References cited:
- WO-A-01/48674
- US-A- 6 167 517
- US-B1- 6 182 076

## Description

### Field of the Invention

The present invention relates generally to biometric technologies, and more particularly, to biometrically-controlled access of computer resources.

### Background of the Invention

Considerations regarding the safeguarding of computer resources have become ubiquitous throughout industry, government and private channels. Security concerns are exacerbated in networked environments, where the desire to exchange data is often at odds with attempts to ensure system integrity. Networks typically include one or more servers and numerous client computer terminals, referred to herein as local computers, communicating over network communication links. The communication links may be comprised of cables, wireless links, optical fibers, and/or other communication media. Similarly, the local computers may be desktop personal computers, laptop computers, PDA's, or other computing devices to which or through which a user desires to obtain access. Secure networks commonly incorporate password software and procedures configured to restrict and control access to the network. However, despite such provision, password-controlled access remains fraught with security concerns, such as ease of duplication. Users may additionally have difficulty remembering passwords.

Consequently, many networks rely on biometric authentication processes to safeguard computer resources. With biometric authentication, a measurable physical characteristic of a potential user is obtained as a signature rather than a password. Such physical characteristics are usually very unique to the user and thus difficult to duplicate, defeat, or forget. Examples include fingerprints, retinal scans and voice signatures. Other examples might include hand, facial and/or cranial measurements and dimensions. For biometric access, a user who desires to access a network must first be enrolled on the network with that person's unique biometric data. That unique biometric data is typically obtained by the user logging in to the network with an administrator who oversees the process, such as at an administrator's or specially designated enrollment computer.

At that designated computer, the user will provide his or her user ID and also provide the requisite biometric data to one or more biometric access devices associated with the computer, such as by placing the appropriate finger in a fingerprint scanner or reader, exposing the eye to a retinal scan, or speaking into a microphone or the like, by way of examples, connected to that designated computer. The administrator typically oversees this process, which results in the generation of a set of data referred to herein as a biometric identification record (''BIR"), or perhaps multiple BIR's depending upon the number and type of biometric access devices to be used. The BIR is then stored on a network server as enrollment BIR data in a file associated with the particularly identified user ("privileged user"), such as by associating the enrollment BIR data with that user's ID.

When a user desires thereafter to access the network through a local computer coupled to the network, the user again provides the ID and the requested biometric information through a biometric access device associated with the local computer. The biometric data captured at the local computer produces a temporary BIR referred to hereinafter as "capture BIR data." The local computer and the server on the network communicate in an effort to authenticate the capture BIR data with the enrollment BIR data to determine whether the accessing user should be given access as if he or she were the privileged user who had enrolled at the network.

The enrollment BIR data is highly unique, as is the capture BIR data, thus presenting a formidable challenge to falsify, or otherwise defeat for purposes of accessing the network. The same enrollment and capture BIR data techniques can be applied to stand-alone computers as well, provided that the privileged user has gone through the enrollment process at that computer to provide an enrollment BIR thereto. The practical difficulties in having enrollments both at the network and at the local computers become more apparent when the significant time, effort and resources required to provide the enrollment process are understood.

The difficulties become especially compounded in large enterprises with a great many users and/or local computers. That problem becomes even more exacerbated in enterprises where the various users may move from computer to computer, thus necessitating multiple enrollments. Thus, in a network-based system, users will not typically be enrolled at their local computers. Instead, enrollment will typically be only at the network level, so as to avoid the time and expense of such enrollment procedures for the administrative staff. As a result, then, enrollment is accomplished only once per privileged user at the designated enrollment computer, and the enrollment BIR data held at the network server. That way, the user may seek to login through any local computer on the network using biometric access and the enrollment BIR data is available for the authentication without multiple enrollments.

Limiting enrollment to the network level, however, can present additional drawbacks. For example, there may be times when the user wishes to access the local computer, but the local computer is not able to communicate with the network server. That situation can arise when the network or server is down, or if the local computer is simply disconnected from the network, a not uncommon problem in the case of laptops, PDA's or other mobile computing devices. But, because an enrollment process has not been undertaken with that now-disconnected local computer, the only security available thereon is the traditional and unreliable password method. It would be desirable to still have biometrically controlled access to the local computer, but without requiring that the privileged user have specifically undergone the time consuming enrollment procedure with that particular local computer.

In addition, and as indicated above, the accessing user must provide his or her ID, in addition to the capture BIR data. Where many users enjoy access to the same local computer, the requirement to provide the ID is seen as a practical necessity, but is also the source of frustration and delay. That frustration is particularly evident where the local computer, on an attempted login, brings up the ID of the last user, and the current accessing user does not notice that the ID is for another user. That accessing user will proceed to provide his biometric data, but will not be authenticated because the ID for another user. The result is at least a delay, if not lock-out from the system for that accessing user or perhaps the true privileged user. Such frustrations, among others, may ultimately translate into a reluctance on behalf of users to login with biometric access devices, opting instead for the conventional password approach, with its many security problems.

Patent specifications US 6182076 B1, US 5280527 and US 6167517 disclose biometric authentication systems.

### Summary of the Invention

The present invention provides an improved method, apparatus and program product for controlling biometric access to a computer of a user in a manner that addresses above-identified shortcomings of known biometric systems. To this end, and in accordance with the principles of the present invention, after the accessing user seeking access through a local computer is authenticated (i.e., the capture BIR and enrollment BIR data is found to match appropriately), a copy of the enrollment BIR data normally stored on the network server is further stored, or cached, in local computer for later use, such as after the current user has logged out of the network. In that way, the privileged user has automatically become enrolled on the local computer, without going through a formal, additional enrollment process at the local computer.

Instead, the enrollment at the local computer is, essentially, transparent to the user. However, because the copy of the enrollment BIR data, either directly or in encrypted form, is now also available at the local computer, access to the local computer, even when disconnected from the network, can be biometrically controlled without a further enrollment process by the user. The copy store technique may be applied to some or all of the local computers in an enterprise such that the administrative time, and the inconvenience of multiple enrollments that would otherwise militate against using biometrics to control access to the local computers in a stand-alone mode, becomes practical and easily accomplished.

In accordance with a further feature of the present invention, and based on the uniqueness of enrollment BIR data from user to user, it is now possible to also reduce or eliminate the need for user ID's. For example, the local computer may retain the copies of the enrollment BIR data, and associated ID's if necessary, for the last number of authenticated users. Due to the highly correlative nature of BIR data, an accessing user may now be permitted to log in using only capture BIR data, which is then compared against the stored copies of enrollment BIR data for an appropriate match. The absence of the ID is no longer a factor as the enrollment BIR data may be solely relied upon to control access and/or the ID may be retained with the stored copy to provide the same to the network or local computer operating system if otherwise required. In that way, a fast login is accomplished because the delays involved with inputting or correcting the ID are eliminated.

The same fast login technique may be spread up to the network where privileged users, or certain sets of privileged users, may be permitted to login to the network through a local computer without the ID, and based only on a comparison of the capture BIR data and the enrollment BIR data.

By virtue of the foregoing there is thus provided an improved method, apparatus and program product for controlling biometric access to a computer of a user in a manner that addresses above-identified shortcomings of known biometric systems. These and other objects and advantages of the present invention shall be made apparent from the accompanying drawings and the description thereof.

The invention is defined according to claims 1, 33, 35, and 65.

### Brief Description of the Drawing

The accompanying drawings, which are incorporated in and constitute apart of this specification, illustrate embodiments of the invention and, together with the general description of the invention given above and the detailed description of the embodiments given below, serve to explain the principles of the present invention.
Fig. 1 is a block diagram of a networked computer system consistent with the invention;
Fig. 2 is a block diagram of an exemplary hardware and software environment for a computer from the networked computer system of Fig. 1;
Fig. 3 is a flowchart outlining method steps suited for execution within the environments of Figs. 1 and 2;
Fig. 4 is a flowchart illustrate process steps associated with the BIR caching method of Fig. 3;
Fig. 5 is a dialog box having application within the process steps of Fig. 4;
Fig. 6 is a flowchart illustrating method steps in accordance with the principles of the present invention;
Fig. 7 is a dialog box consistent with the principles of the invention and having particular application within the process steps of Fig. 6.

### Detailed Description of Drawings

With reference generally to Drawings, there is shown a system 10 configured to retrieve an enrollment BIR of a privileged user from a server 16 in response to that user gaining access to a network 18. The system 10 locally stores the retrieved BIR data on a computer 20. As such, the enrollment BIR is subsequently available locally for authentication purposes when the computer 20 becomes disconnected from the network 18. Having thus obviated the need to retrieve enrollment data from the network 18, the user is permitted to gain access to the computer 20 irrespective of a network 18 connection.

Further, because the storage of the enrollment BIR data is accomplished locally, BIR data for multiple, prior users may be stored on the local computer 20. This feature allows a user to biometrically access the computer 20 without first providing his or her ID. Namely, a user may solely provide capture BIR data directly to the computer 20, which is evaluated against the locally stored enrollment BIR data of prior users. The highly correlative nature of the BIR's facilitate matching of the capture and enrollment data in the absence of a submitted ID. A subsequent correlation of the capture and enrollment BIR data may verify the status of the accessing user as being privileged as above. These and other exemplary embodiments in accordance with the principles of the present invention are described below in detail.

### Hardware and Software Environment

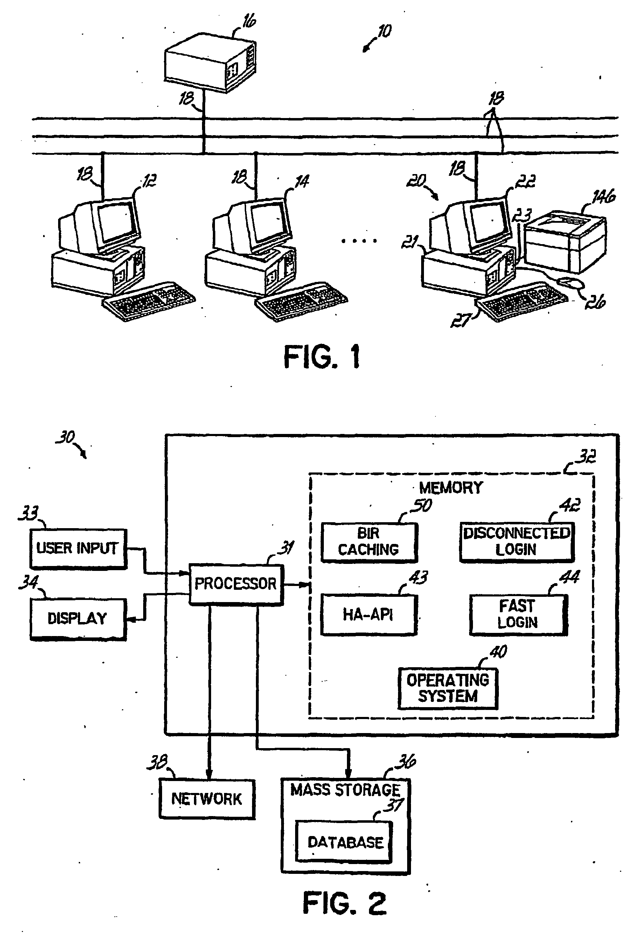

Turning to the Drawings, wherein like numbers denote like parts throughout the several views, Fig. 1 illustrates an exemplary computer system 10 suitable for biometrically controlling access to a user computer 20 adapted to communicate with a network 18. As such, computer system 10 is illustrated as a networked system that includes one or more client computers 12, 14 and 20 (e.g., lap top, desktop or PC-based computers, workstations, etc.) coupled to server 16 (e.g., a PC-based server, a minicomputer, a midrange computer, a mainframe computer, etc.) through a network 18. Network 18 represents a networked interconnection, including, but not limited to local-area, wide-area, wireless, and public networks (e.g., the Internet). Moreover, any number of computers and other devices may be networked through network 18, e.g., multiple servers. Significantly, the present invention may have particular application when a computer 12, 14, 20 becomes disconnected from the network 18.

User computer 20, which may be similar to computers 12, 14, may include: a central processing unit (CPU) 21, a number of peripheral components such as a computer display 22, a storage device 23, a printer 24, and various input devices (e.g., a mouse 26, keyboard 27) to include biometric login devices. Those skilled in the art will recognize that biometric devices compatible with the present invention are not limited to the exemplary devices shown in Fig. 1 which include a fingerprint scanner 17 and microphone (voice recognition) 19. Consequently, suitable input devices may comprise any mechanism configured to receive BIR data. Server computer 16 may be similarly configured, albeit typically with greater processing performance and storage capacity, as is well known in the art.

Fig. 2 illustrates a hardware and software environment for an apparatus 30 suited to control biometric access with regard to a user in a manner consistent with the principles of the invention. For the purposes of the invention, apparatus 30 may represent a computer, computer system or other programmable electronic device, including: a client computer (e.g., similar to computers 12, 14 and 20 of Fig. 1), a server computer (e.g., similar to server 16 of Fig. 1), a portable computer, an embedded controller, etc. Apparatus 30 will hereinafter also be referred to as a "computer," although it should be appreciated the term "apparatus" may also include other suitable programmable electronic devices consistent with the invention.

Computer 30 typically includes at least one processor 31 coupled to a memory 32. Processor 31 may represent one or more processors (e.g., microprocessors), and memory 32 may represent the random access memory (RAM) devices comprising the main storage of computer 30, as well as any supplemental levels of memory, e.g., cache memories, non-volatile or backup memories (e.g., programmable or flash memories), read-only memories, etc. In addition, memory 32 may be considered to include memory storage physically located elsewhere in computer 30, e.g., any cache memory in a processor 31, as well as any storage capacity used as a virtual memory, e.g., as stored within a biometric database 36 or on another computer coupled to computer 30 via network 38.

Computer 30 also may receive a number of inputs and outputs for communicating information externally. For interface with a user, computer 30 typically includes one or more input devices 33 (e.g., a keyboard, a mouse, a trackball, a joystick, a touchpad, retinal/fingerprint scanner, and/or a microphone, among others) and a display 34 (e.g., a CRT monitor, an LCD display panel, and/or a speaker, among others). It should be appreciated, however, that with some implementations of computer 30, e.g., some server implementations, direct user input and output may not be supported by the computer, and interface with the computer may be implemented through a client computer or workstation networked with computer 30.

For additional storage, computer 30 may also include one or more mass storage devices 36 configured to store a biometric database 37. Exemplary devices 36 can include: a floppy or other removable disk drive, a hard disk drive, a direct access storage device (DASD), an optical drive (e.g., a CD drive, a DVD drive, etc.), and/or a tape drive, among others. Furthermore, computer 30 may include an interface with one or more networks 38 (e.g., a LAN, a WAN, a wireless network, and/or the Internet, among others) to permit the communication of information with other computers coupled to the network. It should be appreciated that computer 30 typically includes suitable analog and/or digital interfaces between processor 31 and each of components 32, 33, 34, 36 and 38.

Computer 30 operates under the control of an operating system 40, and executes various computer software applications, components, programs, objects, modules, etc. (e.g., BIR caching program 50, disconnected login program 42, and fast login program 44, HA-API 43, among others). Of note, Human Authentication Application Programming Interface (HA-API) regards an exemplary programming interface supplied by biometric service providers that provides enrollment and verification services for installed biometric devices. Moreover, various applications, components, programs, objects, modules, etc. may also execute on one or more processors in another computer coupled to computer 30 via a network 38, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions will be referred to herein as "computer programs," or simply "programs." The computer programs typically comprise one or more instructions that are resident at various times in various computer memory and storage devices. When a program is read and executed by a processor, the program causes the computer to execute steps or elements embodying the various aspects of the invention.

Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of signal bearing media used to actually carry out the distribution. Examples of signal bearing media include but are not limited to recordable type media such as volatile and non-volatile memory devices, floppy and other removable disks, hard disk drives, optical disks (e.g., CD-ROM's, DVD's, etc.), among others, and transmission type media such as digital and analog communication links.

In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

Those skilled in the art will recognize that the exemplary environments illustrated in Figs. 1 and 2 are not intended to limit the present invention. Indeed, those skilled in the art will recognize that other alternative hardware and/or software environments may be used without departing from the scope of the invention.

### BIR Caching

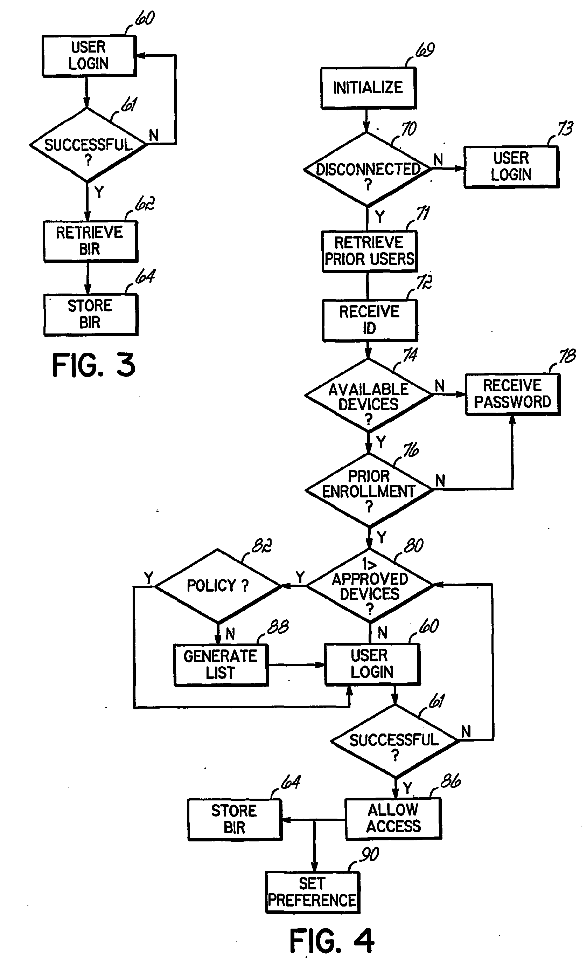

The flowchart of Fig. 3 illustrates an exemplary embodiment for biometrically controlling access of a user with regard to the hardware and software environments of Figs. 1 and 2. Generally, BIR caching calls for the local storage of enrollment BIR data correlated with a privileged user. The BIR caching program of Fig. 2 causes an accessing user to provide capture BIR data to a local computer when accessing a network server. One embodiment retrieves and stores the enrollment BIR data from the server following a successful network login. As discussed below, such enrollment data may have application for facilitating remote and accelerated user access.

More particularly, Fig. 3 illustrates sequenced steps suited to locally store enrollment BIR data correlated with a user, subsequent to the user gaining access to a network. At block 60, the BIR caching program may recognize that a user is attempting to log into a computer system biometrically. As discussed above, this may involve fingerprint/voice recognition, retinal scans, or other known biometric techniques and procedures. Of note, should the BIR caching program detect a unsuccessful biometric logon at block 61 (as defined by the particular biometric testing application), then the BIR caching processes described below in steps 62-64 go unexecuted. In this manner, local storage of the BIR data may only be accomplished after a successful biometric login to the network registers at block 61.

Assuming the user successfully gains access to the network at block 61, BIR caching software incident on the local machine of the user retrieves the enrollment BIR of the user at block 62. The retrieval may involve recording the BIR from the network server at block 62. As such, the program will access network data base files to download the BIR onto the hard drive of the user's computer. Alternatively, the program may simultaneously record the enrollment BIR as it is used to authenticate the user at block 60. As such, the program may initiate local storage of the BIR data incident with a successful login attempt at block 61.

A third embodiment may prompt a logged-in user to resubmit capture BIR data used explicitly for storage on the local hard drive of the user's computer. For instance, the user may re-accomplish the biometric authentication sequence used to gain access at block 60. As such, the program may cache the capture BIR data for later use on the same computer.

In any case, the program stores and associates the retrieved BIR with the ID and/or operating system password information of the user. The BIR data and associative relationships are stored within memory of the computer at block 64. Of note, the memory may comprise a cache or database configured for quick retrieval of the BIR data. The program may further structure the memory to sequentially store BIR and ID information for a preset number of recent users. This feature may prove convenient in situations where multiple users exclusively share a computer. For instance, the program can initiate a display of the ten most recent users to access the computer. In this manner, an accessing user may select their displayed ID from a scroll down bar menu as discussed below in detail.

The selection prompts the program to retrieve the enrollment BIR data and other information associated with the user from the hard drive of the local computer. This provision facilitates login processes by enabling a direct comparison between the stored and capture BIR data. Of note, the BIR caching method of Fig. 3 may be repeated every time a user successfully logs into a computer. As such, the most recently stored BIR data accounts for subtle, physical changes in the biometric characteristics of the user that can occur over time.

### Disconnected Login

The methodology of the steps of Fig. 3 have application within the disconnected login sequence illustrated in Fig. 4. Generally, the BIR caching sequence of Fig. 3, integrated into the flowchart of Fig. 4, allows a user who has been successfully granted access to a network via biometric authentication to subsequently use the same BIR to access the client computer when disconnected from the network. Once a user has logged into the network through a specific computer, enrollment BIR data from the network is downloaded into the memory of the disconnected computer for subsequent access to the computer on a local basis. Of note, enrollment BIR data may not be retrieved until after the accessing user has authenticated their data for the first time.

In this manner, the disconnected login program of Figs. 2 and 4 enables a user accessing a computer separated from network communications to nonetheless gain access to it biometrically. Significantly, the user accesses the detached computer using the same BIR that is stored on the network. Absent such provision, a remote user would be unable to biometrically access their account. Of note, the flowchart of Fig. 4 presupposes that an account has been established for the user, as discussed in the text accompanying Fig. 3.

Turning more particularly to block 69 of Fig. 4, the user may initiate normal startup processes at a computer terminal. For instance, the user may boot the computer or initiate proprietary software resident on the machine. For example, protocol may require all users to depress a sequence of keyboard symbols to initiate program execution. In response, the computer may activate the disconnected login program 42 of Fig. 2 at block 70 of Fig. 4. In one embodiment, the program may initially query a server, operating system, or user input to determine if disconnected login processes are required or requested.

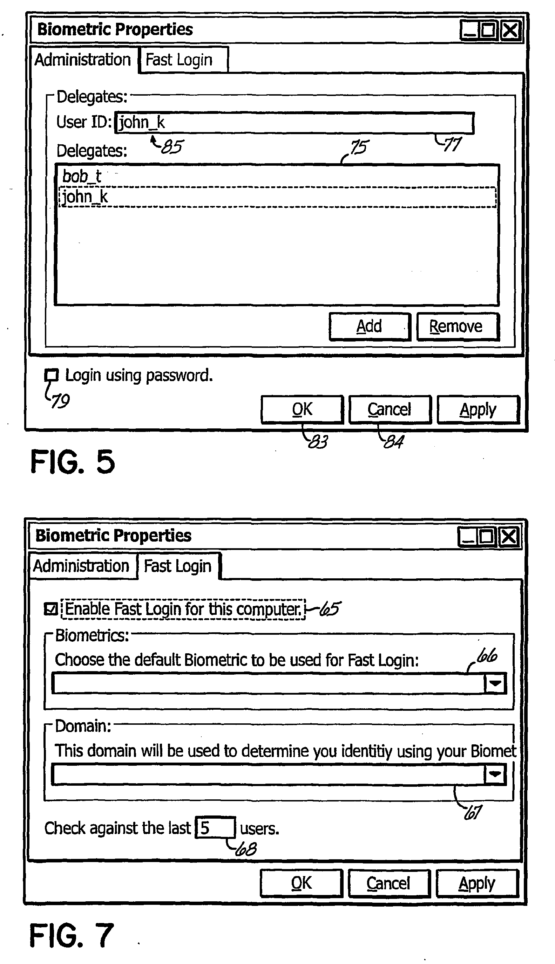

If such a determination is made at block 70 of Fig. 4, then the program may retrieve at block 71 a list of prior users who have most recently logged into the machine. Of note, the storage of the data associated with the users is accomplished locally at the client computer. This feature obviates any requirement to communicate with the network to retrieve prior user data. As above, the computer may display the list of users in the form of a drop-down screen box. An administrator may set the number of user ID's displayed according to application and performance considerations. As such, a user may scroll down the drop-down box to select their name at block 72. If the name of an accessing user is not displayed by the computer at block 71, the embodiment may present the user with the option of typing their name onto a text field. Fig. 5 shows a suitable dialog box having such a text field 77 and drop-down box 75. As shown in Fig. 5, the user may submit their designated user name 85 by depressing the "OK" button 83. The user may alternatively end a login session by selecting the "Cancel" button 84. In one embodiment, the dialog box may further include a password login option 79. As such, a client may access the computer using the conventional password option of block 78 of Fig. 4 so long as allowed by the system administrator. Another embodiment may require users to access their accounts using their conventional password in combination with biometric processes.

The program may subsequently evaluate which biometric devices are installed and available on the local machine at block 74 of Fig. 4. For example, the local computer of the user may be equipped with both fingerprint and retinal biometric testing devices. Proprietary programs associated with conventional biometric testing devices place a marker within a registry of the computer upon installation and de-installation. This registry provides a mechanism for the embodiment to assess available devices at block 74. If no device is configured or available on the computer, then the user must login using a password if the option is available at block 78.

At block 76, the computer may determine whether biometric enrollment on an available device has ever taken place on the computer with regard to the user desiring access. If not, then the user may again be relegated to the password entry of block 78. Should the computer alternatively determine that the user has previously logged in using a biometric device detected at block 74, then the disconnected login program may next determine whether more than one biometric login device is available on the machine. Of note, should only one biometric device be available and previously accessed, the program may initiate authentication processes directly at block 60.

Should the program determine that more than one device is available and previously utilized at block 80, then the embodiment may check to see if a policy setting has been established for the user at block 82. Such a setting acts as a default, or preference for a particular user, directing the computer to select a single or ordered group ofbiometric devices from among the available devices. As discussed herein, such a preference may be set by an administrator or designated by a prior designation of the user. For instance, the user may set a preference subsequent to login at block 90, as discussed below.

Should the program detect a preferred setting at block 82 that corresponds to an allowable testing device, then it may initiate testing sequences associated with the preferred biometric device at block 60. Should no single, biometric testing preference be recorded for the user at block 82, then one embodiment may prompt the user to select a biometric testing sequence at block 88 from a listing displayed at the terminal. As such, the user may select one or more biometric verification processes by typing in or clicking on a device displayed at block 88. The program may derive the list from those installed devices detected at block 74.

In response to any such designation, the program retrieves software associated with the designated biometric in preparation of the biometric challenge at block 60. The program then launches the designated/preferred biometric test according to the preset parameters of the biometric verification sequence. Should the verification process be unsuccessful at block 61, the program relegates the user back to block 80 to select from the same or other available biometric login devices. Of note, the respective login protocol may allow for multiple authentication attempts at block 61 before ending a session. Otherwise the user accesses the computer at block 86. The BIR enrollment data associated with the login may then be stored at block 64 along with other user data, as discussed above in the BIR caching sequences of Fig. 3. The privileged user may additionally click on a dialog box at block 90 to set a biometric preference for subsequent logon sessions.

Fig. 7 shows an exemplary dialog box suited for application within the processes of Fig. 4. As shown, the user may select a desired domain 67 that the program will locate upon a subsequent login session or after initialization processes of block 69 of Fig. 4. As such, the domain may relate to program and interface addresses required by the user to gain access to a biometric challenge. In another embodiment, domain selection may be transparent to the user as set by an administrator or software precept. Similarly, the user may enter a preferred biometric login device with a preference field 66 of Fig. 7. As discussed above, this preference may direct policy determinations regarding login devices at block 82 of Fig. 4 on subsequent login sessions. Thus, in use, the disconnected login feature frees up network resources, as an authentication process may be conducted without taxing CPU cycles of the central server.

### Fast Login

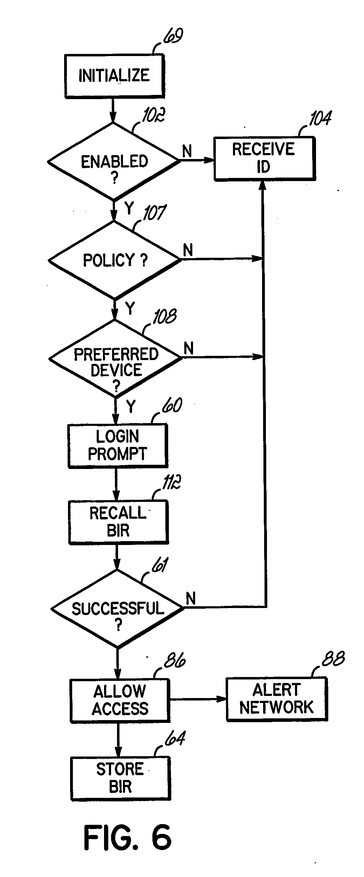

Another embodiment consistent with the principles of the present invention and shown in Fig. 6 allows an accessing user to biometrically access a computer without first providing another source of identification. Of note, the embodiment may operate within the confines of the disconnected login processes of Fig. 4. To this end, the dialog box of Fig. 7 includes a "Fast Login" option 65 as discussed below. A system administrator may additionally configure multiple, networked computers to enable an accelerated biometric login. Such a designation obviates the conventional user requirement of providing the ID for the enabled client computers.

Unlike prior art systems, an accessing user merely provides capture BIR data at the local computer. For instance, the accessing user's first interaction with a machine may comprise the placement of an index finger onto a scanner in communication with the computer. Similarly, a microphone coupled to the computer may recognize the voice pattern of the accessing user without first requiring identification information. Program software running on the computer compares capture BIR data to stored enrollment BIR data and determines if a match is present. In the event of such a match, the program may retrieve and configure an ID and password associated with the enrollment BIR data to verify privileged access status of the user.

Figure 6 shows sequence steps suited to realize the fast login process described above. At block 69, the accessing user initiates any necessary, preliminary processes associated with the computer, operating system and/or network. For instance, the user may have to strike a particular combination on a keyboard, or merely power-up the computer. As discussed below in detail, the initialization sequence may prompt a fast login program to retrieve cached BIR data. At block 102, the program may first confirm that the computer/server is configured to allow fast login. For instance, a most recent user accessing the computer may check the "Fast Login" box 65 of Fig. 7 during normal login or log-out processes. Such a designation causes the fast login program to automatically initiate during subsequent login sessions.

Alternatively or in addition, a system administrator may set the domain of the computer and/or network such that the computer software locates the fast login address upon initialization at block 69. In either case, the computer accessed by the user recognizes at block 102 that fast login has been enabled. Regarding block 69, some computers and networks may not require such initialization processes, and rather allow the user to proceed directly to block 107. Of note, should fast login be disabled for the computer at block 102, the conventional login sequence for the computer may be invoked at block 104. Namely, the user may be prompted to enter in their ID prior to submitting capture BIR data.

In response to detecting an enabled fast login, the computer may execute further fast login software processes at block 107. More particularly, the program may determine if a policy has been established for the accessed computer. A policy may include a programmed preference or mandate for a biometric testing device established by an administrator or a prior user. Should a connection to the network be established, the computer may similarly query the server for a biometric testing device preference(s). Of note, should no preference be available via the server, the program may substitute a default preference, not shown in the embodiment of Fig. 6. The default preference, as discussed herein, may track a compilation of available biometric devices on the machine and ascertained at block 108. The policy may further be specific to fast login applications. Alternatively at block 107, the absence of a preference may cause the program to force the user to provide an ID at block 104.

The fast login program may at block 108 determine which, if any, of the preferred biometric testing devices are actually installed on the computer. To this end, the software program may query a registry value of the operating system at block 108. As is known, such registries contain information entered incident upon the installation of a biometric testing device. In this manner, the register provides an accounting of devices installed on the computer. In an instance where the computer is in communication with the network, the computer may alternatively check the server to obtain status information pertinent to available biometric devices. Should no acceptable or preferred biometric testing device be located on the computer at block 108, the software will, as above, relegate the user to conventional ID login at block 104.

Should the preferred biometric testing device be thus available and approved, the user may be prompted to provide the appropriate capture BIR data at block 60. More particularly, the program may initiate and display a splash screen configured to cause the user to provide the preferred and appropriate biometric testing data. For instance, a fingerprint authentication application may prompt the user, "please place finger on pad." At block 60, the user may provide the appropriate capture BIR data. The computer, in turn, retrieves the capture BIR data according to the known biometric login sequence appropriate to the preferred testing device.

In response to receiving the capture BIR data at block 60, the software may recall at block 112 a stored list of ID's and associated enrollment BIR data corresponding to a number of most recent users accessing the computer. The program may limit the number of prior users stored to 5-10 for processing and time considerations. Of note, however, an administrator may increase or decrease the number of users stored per application and CPU resource availability. For instance, an administrator could configure hundreds of workstations for fast login given adequate processing resources.

At block 61, the program may attempt to verify the capture BIR data using the retrieved history of recent logins. That is, the program sequentially evaluates stored enrollment BIR data until a numerical match is detected. Of note, the program may begin evaluating the stored data in chronological order beginning with the most recent user to access the computer. Once a match is detected, the program may transparently recall and present any ID or password information associated with the matched BIR that is required by an operating system. As discussed below, this feature fulfills vendor and system requirements while liberating an accessing user from password/ID redundancies. As shown in Fig. 7, a privileged user may enter within a text field 68 the number of prior users against which the program verifies the capture BIR data.

Should the biometric match be detected at block 61, then the user gains access to the desired resources of the computer and/or network at block 86. Of note, one embodiment may repeat unsuccessful authentication processes at block 61 three to five times prior to directing the client to use conventional user ID login sequences at block 104. The fast login program may cache a successful biometric login memory at block 64, as well as alert the network server as to the successful login at block 88. This step may provide an additional layer of security to a network by insuring that the same user is not accessing the network concurrently from two separate locations. Thus, in use, the fast login feature enables a user to bypass presentation of user identification information and merely provide an enrollment data to access the computer.

While the present invention has been illustrated by the description of embodiments thereof, and while the embodiments have been described in considerable detail, it is not intended to restrict or in any way limit the scope of the appended claims to such detail. Additional advantages and modifications will readily appear to those skilled in the art. For example, a program of the invention may encrypt biometric data, conventional passwords and other information at any step delineated in the flowcharts of Figs. 3, 4 and 6.

Further, one skilled in the art should appreciate that any of the embodiments and associated programs discussed above are compatible with all known biometric testing processes and may further be optimized to realize even greater efficiencies. For instance, an operating system executing a program of the invention may dictate a login path or routine. The operating system or administrator may define the login path that consists of, for instance, a password followed by a fingerprint scan. As such, the operating system may require both the password and a BIR. Thus, software of the present invention works within and complements the HA-API to transparently associate, retrieve and present the password associated with the BIR enrollment data of the accessing user along with the capture BIR data.

More specifically, the password associated with the stored BIR data is retrieved from cached memory and sent to the operating system. In this manner, the programming requirements of the operating system and biometric vendor are fulfilled without burdening the accessing user with conventional password requirements. The invention in its broader aspects is, therefore, not limited to the specific details, representative apparatus and method, and illustrative examples shown and described. Accordingly, departures may be made from such details without departing from the scope of the general inventive concept.

## Claims

1. A method of biometrically controlling a user's access to a computer (20, 30) adapted to communicate with a network (18) having at least one server (16) associated therewith, comprising: storing at the server (16), enrollment BIR data correlated with a privileged user; causing an accessing user to provide capture BIR data to the computer (20) and causing the computer (20) to communicate with the server (16) via the network (18), and evaluating the capture BIR data with the enrollment BIR data to determine whether the accessing user is to be given access to the network (18) as the privileged user via the computer (20), **characterized in that** if the accessing user is to be given access to the network (18) as the privileged user, a copy of the enrollment BIR data is thereafter stored in the computer (20) for later use in subsequent access attempts.

2. A method as claimed in Claim 1 further comprising retrieving the enrollment BIR from the server.

3. A method as claimed in either Claim 1 or Claim 2 further comprising encrypting the enrollment BIR data at the computer (20).

4. A method as claimed in either Claim 1 or Claim 2 further comprising encrypting the enrollment BIR data at the server (16).

5. A method as claimed in any preceding claim further comprising after storing the copy of the enrollment BIR data at the computer (20), and thereafter, while the computer is not communicating with the network (18), causing the accessing user to provide capture BIR data to the computer (20), and evaluating the capture BIR data and the stored copy of the enrollment BIR data to determine whether the accessing user is to be given access to the computer (20) as the privileged user.

6. A method as claimed in Claim 5 further comprising storing at the computer (20) an ID of at least one previous user of the computer (20).

7. A method as claimed in Claim 6, further comprising storing the enrollment BIR data in such a manner as to be associated with the ID stored on the computer (20).

8. A method as claimed in either Claim 6 or Claim 7 further comprising displaying the ID to the accessing user.

9. A method as claimed in Claim 8 further comprising enabling the accessing user to select the displayed ID.

10. A method as claimed in Claim 9, further comprising retrieving the enrollment BIR data associated with the accessing user in response to the selected ID.

11. A method as claimed in either Claim 9 or 10 further comprising associating a preferred BIR device (33) with the selected ID.

12. A method as claimed in Claim 11 further comprising associating the preferred BIR device (33) with the accessing user.

13. A method as claimed in any of Claims 1 through 5 wherein the accessing user normally has to provide at the computer (20) an ID and the capture BIR data to access the network (18), further comprising after storing the copy of the enrollment BIR data, on a subsequent attempt by the accessing user to gain access via the network (18), causing the accessing user to provide the capture BIR data to the computer (20) without providing the ID, and evaluating the capture BIR data against the stored enrollment BIR data to determine whether the accessing user is to be given access to the computer (20) as the privileged user.

14. A method as claimed in Claim 13 further comprising granting the user access to information retrievable via the computer in response to determining a match between the capture BIR data and the stored copy of the enrollment BIR data.

15. A method as claimed in either Claim 13 or Claim 14 further comprising associating the enrollment BIR data with the ID.

16. A method as claimed in Claim 15 further comprising retrieving the ID in response to receiving the capture BIR data.

17. A method as claimed in any of Claims 13 to 16 further comprising verifying the computer (20) is configured to allow access to the privileged user absent the ID.

18. A method as claimed in any of Claims 13 through 17 further comprising scrambling the ID.

19. A method as claimed in any of Claims 13 through 18 further comprising storing the ID of the accessing user for later recall.

20. A method as claimed in any of Claims 13 to 19 further comprising determining a preferred biometric enrollment device (33).

21. A method as claimed in any one of Claims 11, 12 and 20 further comprising selecting the preferred BIR device (33) according to a setting selected from a group consisting of: user, computer, global, and some combination thereof.

22. A method as claimed in any one of Claims 11, 12 and 20 wherein the preferred biometric enrollment device (33) is determined according to a machine setting.

23. A method as claimed in any one of Claims 11, 12, and 20 to 22 further comprising verifying the availability of the preferred BIR device (33) on the computer (20).

24. A method as claimed in any of Claims 11, 12 and 20 to 23 further comprising determining if the computer (20) is configured to allow access using the preferred biometric enrollment device (33) absent the ID.

25. A method as claimed in Claim 24 as dependent on Claim 20 further comprising causing the user to provide the ID in response to the preferred biometric enrollment device (33) being unavailable.

26. A method as claimed in any of Claims 11, 12 and 20 to 25 further comprising determining a second preferred biometric enrollment device (33).

27. A method as claimed in any of Claims 5 though 26 further comprising storing at the computer (20) a password of at least one previous user of the computer (20).

28. A method as claimed in Claim 27 further comprising storing the enrollment BIR data in such a manner as to be associated with the password stored on the computer (20).

29. A method as claimed in Claim 27 or Claim 28, when dependent upon any of Claims 11, 12 and 20 to 25, further comprising prompting the user to enter the password in response to the preferred BIR device (33) being unavailable.

30. A method as claimed in any of Claims I through 26 further comprising associating the enrollment BIR data with a password.

31. A method as claimed in Claim 30 further comprising retrieving the password in response to receiving the capture BIR data.

32. A method as claimed in any preceding claim further comprising granting the privileged user access to the computer (20) in response to determining a match between the capture BIR data and the stored copy of the enrollment BIR data.

33. An apparatus comprising a memory (36), a database (37) resident within the memory, the database storing enrollment BIR data retrieved from a network (38) and correlated with a privileged user, a program (42, 44, 50) configured to prompt an accessing user to provide capture BIR data to a computer (20) and the computer (20) to communicate with the network, and to initiate an evaluation of the capture BIR data with the enrollment BIR data to determine whether an accessing user is to be given access to the network (38) as the privileged user via the computer (20), **characterized in that** the program (42, 44, 50) is configured such that if the accessing user is to be given access to the network (38) as the privileged user, a copy of the enrollment BIR data is thereafter stored in the database (37) for later use in subsequent access attempts.

34. An apparatus as claimed in Claim 33, wherein the program (42, 44, 50) initiates retrieving the enrollment BIR from the network (18).

35. An apparatus, comprising a memory (32), a database resident within the memory, the database storing enrollment BIR data retrieved from a network (18) and correlated with a privileged user, a program (42, 44, 50) configured to prompt an accessing user to provide capture BIR data to a computer (20) and the computer (20) to communicate with the network, and to initiate an evaluation of the capture BIR data with the enrollment BIR data to determine whether an accessing user is to be given access to the network (18) as the privileged user via the computer (20), **characterized in that** the program (42, 44, 50) is configured such that if the accessing user is to be given access to the network (18) as the privileged user, a copy of the enrollment BIR data is thereafter stored in the computer (20) for later use in subsequent access attempts.

36. An apparatus as claimed in any one of Claims 33 to 35, the program (42, 44, 50) configured such that after storing the copy of the enrollment BIR data at the computer (20), and thereafter, while the computer (20) is not communicating with the network (18), the program (42, 44, 50) further causes the accessing user to provide the capture BIR data to the computer (20) and initiates the evaluation of the capture BIR data and the stored copy of the enrollment BIR data to determine whether the accessing user is to be given access to the computer (20) as the privileged user.

37. An apparatus as claimed in Claim 36 wherein the program (42, 44, 50) initiates storage at the computer (20) of an ID of at least one previous user of the computer (20).

38. An apparatus as claimed in Claim 37 wherein the program (42, 44, 50) initiates storage of the copy of the enrollment BIR data in such a manner as to be associated with the ID stored on the computer (20).

39. An apparatus as claimed in either Claim 37 or Claim 38, wherein the program (42, 44, 50) initiates displaying the ID to the accessing user.

40. An apparatus as claimed in Claim 39 wherein the program (42, 44, 50) enables the accessing user to select the displayed ID.

41. An apparatus as claimed in Claim 40 wherein the program (42, 44, 50) initiates retrieval of the copy of the enrollment BIR data associated with the accessing user in response to the selected ID.

42. An apparatus as claimed in either Claim 40 or Claim 41 wherein the program initiates associating a preferred BIR device (33) with the selected ID.

43. An apparatus as claimed in Claim 42 wherein the program (42, 44, 50) initiates associating the preferred BIR device (33) with the accessing user.

44. An apparatus as claimed in any of Claims 33 to 35 wherein the accessing user normally has to provide at the computer (20) both an ID and the capture BIR data to access the network (18), after initiating storage of the enrollment BIR data and on a subsequent attempt by the accessing user to gain access via the network (18), the program (42, 44, 50) causes the accessing user to provide the capture BIR data to the computer (20) without providing the ID; and causes the evaluation of the capture BIR data against the stored enrollment BIR data to determine whether the accessing user is to be given access to the computer (20) as the privileged user.

45. An apparatus as claimed in Claim 44 wherein the program (42, 44, 50) initiates associating the copy of the enrollment BIR data with the ID.

46. An apparatus as claimed in Claim 45 wherein the program (42, 44, 50) initiates retrieving the ID in response to receiving the capture BIR data.

47. An apparatus as claimed in any of Claims 44 to 46 wherein the program (42, 44, 50) initiates verifying that the computer (20) is configured to allow access to the privileged user absent the ID

48. An apparatus as claimed in any of Claims 44 to 47, wherein the program (42, 44, 50) initiates encryption of the ID.

49. An apparatus as claimed in any of Claims 44 to 48, wherein the program (42, 44, 50) initiates storing the ID of the accessing user for later recall.

50. An apparatus as claimed in any of Claims 44 to 49 wherein the program (42, 44, 50) initiates determining a preferred biometric enrollment device (33).

51. An apparatus as claimed in any one of Claims 42, 43 and 50 wherein the preferred biometric enrollment device (33) is determined according to a machine setting.

52. An apparatus as claimed in any of Claims 42, 43 and 50 wherein the program (42, 44, 50) initiates selecting the preferred BIR device (33) according to a setting selected from a group consisting of: user, computer, global, and some combination thereof.

53. An apparatus as claimed in any one of Claims 42, 43 and 50 to 52 wherein the program (42, 44, 50) initiates determining whether the preferred biometric enrollment device (33) is available on the computer.

54. An apparatus as claimed in any of Claims 42, 43 and 50 to 53 wherein the program (42, 44, 50) initiates determining if the computer (20) is configured to allow access using the preferred biometric enrollment device (33) absent the ID.

55. An apparatus as claimed in Claim 50 or any one of Claims 51 to 54 as dependent on Claim 50 wherein the program (42, 44, 50) initiates causing the user to provide the ID in response to the preferred biometric enrollment device (33) being unavailable.

56. An apparatus as claimed in any of Claims 42, 43 and 50 to 55 wherein the program (42, 44, 50) initiates determining a second preferred biometric enrollment device (33).

57. An apparatus as claimed in Claim 33 wherein the database (36) maintains an ID associated with the enrollment BIR data.

58. An apparatus as claimed in any of Claims 33 to 57 wherein the program initiates storage at the computer (20) of a password of at least one previous user of the computer (20).

59. An apparatus as claimed in Claim 58 wherein the program (42, 44, 50) initiates storing the copy of the enrollment BIR data in such a manner as to be associated with the password stored on the computer (20).

60. An apparatus as claimed in any of Claims 33 through 57 wherein the database (36) maintains a password associated with the enrollment BIR data.

61. An apparatus as claimed in any of Claims 33 through 57, wherein the program (42, 44, 50) initiates associating the enrollment BIR data with a password.

62. An apparatus as claimed in Claim 61 wherein the program (42, 44, 50) initiates retrieving the password in response to receiving the capture BIR data.

63. An apparatus as claimed in any of Claims 60 to 62 as dependent on any one of Claims 42, 43 and 50 to 56 wherein the program (42, 44, 50) initiates prompting the user to enter the password in response to the preferred BIR device (33) being unavailable.

64. An apparatus as claimed in any of Claims 33 through 63 wherein the program (42, 44, 50) initiates the grant of access to the user in response to determining a match between the capture BIR data and the stored copy of the enrollment BIR data.

65. A program product, comprising a program (42, 44, 50) configured to prompt an accessing user to provide capture BIR data to a computer (30), wherein a memory (32) of the computer (30) stores enrollment BIR data retrieved from a network (38) and correlated with a privileged user, and to cause the computer (30) to communicate with the network (38), and further to initiate an evaluation of the capture BIR data with the enrollment BIR data to determine whether an accessing user is to be given access to the network (38) as the privileged user via the computer (30), and a signal bearing medium bearing the program (42, 44, 50), **characterized in that** the program (42, 44, 50) is configured such that if the accessing user is to be given access to the network (38) as the privileged user, a copy of the enrollment BIR data is thereafter stored in the memory (32) of the computer (30) for later use in subsequent access attempts.

66. A program product as claimed in Claim 65 wherein the signal bearing medium includes at least one of a recordable medium and a transmission medium.

## Patentansprüche

1. Verfahren zum biometrischen Regeln des Zugangs eines Benutzers zu einem Computer (20, 30), der für eine Kommunikation mit einem Netzwerk (18) mit wenigstens einem damit assoziierten Server (16) ausgelegt ist, das die folgenden Schritte beinhaltet: Speichern von mit einem berechtigten Benutzer korrelierten registrierten BIR-Daten auf dem Server (16); Veranlassen eines zugreifenden Benutzers, erfasste BIR-Daten in den Computer (20) einzugeben und zu bewirken, dass der Computer (20) mit dem Server (16) über das Netzwerk (18) kommuniziert, und Beurteilen der erfassten BIR-Daten mit den registrierten BIR-Daten, um zu bestimmen, ob dem zugreifenden Benutzer Zugang zum Netzwerk (18) als berechtigter Benutzer über den Computer (20) gewährt werden soll, **dadurch gekennzeichnet, dass**, wenn dem zugreifenden Benutzer Zugang zum Netzwerk (18) als berechtigter Benutzer gewährt werden soll, danach eine Kopie der registrierten BIR-Daten in dem Computer (20) zur späteren Benutzung in nachfolgenden Zugriffsversuchen gespeichert wird.

2. Verfahren nach Anspruch 1, das ferner das Abrufen der registrierten BIR-Daten von dem Server beinhaltet.

3. Verfahren nach Anspruch 1 oder Anspruch 2, das ferner das Verschlüsseln der registrierten BIR-Daten auf dem Computer (20) beinhaltet.

4. Verfahren nach Anspruch 1 oder Anspruch 2, das ferner das Verschlüsseln der registrierten BIR-Daten auf dem Server (16) beinhaltet.

5. Verfahren nach einem der vorherigen Ansprüche, das ferner das Veranlassen, nach dem Speichern der Kopie der registrierten BIR-Daten auf dem Computer (20) und danach, während der Computer nicht mit dem Netzwerk (18) kommuniziert, des zugreifenden Benutzers, erfasste BIR-Daten in den Computer (20) einzugeben, und das Beurteilen der erfassten BIR-Daten und der gespeicherten Kopie der registrierten BIR-Daten beinhaltet, um zu bestimmen, ob dem zugreifenden Benutzer Zugang zu dem Computer (20) als berechtigter Benutzer gewährt werden soll.

6. Verfahren nach Anspruch 5, das ferner das Speichern einer ID von wenigstens einem vorherigen Benutzer des Computers (20) auf dem Computer (20) beinhaltet.

7. Verfahren nach Anspruch 6, das ferner das Speichern der registrierten BIR-Daten auf eine solche Weise beinhaltet, dass sie mit der auf dem Computer (20) gespeicherten ID assoziiert sind.

8. Verfahren nach Anspruch 6 oder Anspruch 7, das ferner das Anzeigen der ID dem zugreifenden Benutzer beinhaltet.

9. Verfahren nach Anspruch 8, das ferner beinhaltet, dem zugreifenden Benutzer das Auswählen der angezeigten ID zu ermöglichen.

10. Verfahren nach Anspruch 9, das ferner das Abrufen der mit dem zugreifenden Benutzer assoziierten registrierten BIR-Daten entsprechend der gewählten ID beinhaltet.

11. Verfahren nach Anspruch 9 oder 10, das ferner das Assoziieren eines bevorzugten BIR-Gerätes (33) mit der gewählten ID beinhaltet.

12. Verfahren nach Anspruch 11, das ferner das Assoziieren des bevorzugten BIR-Gerätes (33) mit dem zugreifenden Benutzer beinhaltet.

13. Verfahren nach einem der Ansprüche 1 bis 5, wobei der zugreifende Benutzer normalerweise eine ID und die erfassten BIR-Daten in den Computer (20) eingeben muss, um auf das Netzwerk (18) zuzugreifen, und das ferner das Veranlassen, nach dem Speichern der Kopie der registrierten BIR-Daten, bei einem nachfolgenden Versuch durch den zugreifenden Benutzer, Zugang über das Netzwerk (18) zu erhalten, des zugreifenden Benutzers, die erfassten BIR-Daten in den Computer (20) einzugeben, ohne die ID zu geben, und das Beurteilen der erfassten BIR-Daten anhand der gespeicherten registrierten BIR-Daten beinhaltet, um zu bestimmen, ob dem zugreifenden Benutzer Zugang zum Computer (20) als berechtigter Benutzer gewährt werden soll.

14. Verfahren nach Anspruch 13, das ferner beinhaltet, dem Benutzer als Reaktion auf die Ermittlung einer Übereinstimmung zwischen den erfassten BIR-Daten und der gespeicherten Kopie der registrierten BIR-Daten Zugang zu über den Computer abrufbaren Informationen zu gewähren.

15. Verfahren nach Anspruch 13 oder Anspruch 14, das ferner das Assoziieren der registrierten BIR-Daten mit der ID beinhaltet.

16. Verfahren nach Anspruch 15, das ferner das Abrufen der ID als Reaktion auf den Empfang der erfassten BIR-Daten beinhaltet.

17. Verfahren nach einem der Ansprüche 13 bis 16, das ferner das Prüfen beinhaltet, ob der Computer (20) so konfiguriert ist, dass er dem berechtigten Benutzer ohne Vorliegen der ID Zugang gewähren kann.

18. Verfahren nach einem der Ansprüche 13 bis 17, das ferner das Verschlüsseln der ID beinhaltet.

19. Verfahren nach einem der Ansprüche 13 bis 18, das ferner das Speichern der ID des zugreifenden Benutzers zum späteren Abrufen beinhaltet.

20. Verfahren nach einem der Ansprüche 13 bis 19, das ferner das Ermitteln eines bevorzugten biometrischen Registriergerätes (33) beinhaltet.

21. Verfahren nach einem der Ansprüche 11, 12 und 20, das ferner das Auswählen des bevorzugten BIR-Gerätes (33) gemäß einer Einstellung beinhaltet, die ausgewählt ist aus einer Gruppe bestehend aus: Benutzer, Computer, global und einer Kombination davon.

22. Verfahren nach einem der Ansprüche 11, 12 und 20, wobei das bevorzugte biometrische Registriergerät (33) je nach einer Maschineneinstellung bestimmt wird.

23. Verfahren nach einem der Ansprüche 11, 12 und 20 bis 22, das ferner das Prüfen der Verfügbarkeit des bevorzugten BIR-Gerätes (33) auf dem Computer (20) beinhaltet.

24. Verfahren nach einem der Ansprüche 11, 12 und 20 bis 23, das ferner das Ermitteln erfasst, ob der Computer (22) so konfiguriert ist, dass er ohne Vorliegen der ID Zugang zur Benutzung des bevorzugten biometrischen Registriergerätes (33) gewähren kann.

25. Verfahren nach Anspruch 24 in Abhängigkeit von Anspruch 20, das ferner das Veranlassen des Benutzers beinhaltet, die ID als Reaktion darauf zu geben, dass das bevorzugte biometrische Registriergerät (33) nicht verfügbar ist.

26. Verfahren nach einem der Ansprüche 11, 12 und 20 bis 25, das ferner das Ermitteln eines zweiten bevorzugten biometrischen Registriergerätes (33) beinhaltet.

27. Verfahren nach einem der Ansprüche 5 bis 26, das ferner das Speichern eines Passwortes von wenigstens einem vorherigen Benutzer des Computers (20) auf dem Computer (20) beinhaltet.

28. Verfahren nach Anspruch 27, das ferner das Speichern der registrierten BIR-Daten auf eine solche Weise beinhaltet, dass sie mit dem auf dem Computer (20) gespeicherten Passwort assoziiert werden.

29. Verfahren nach Anspruch 27 oder Anspruch 28 in Abhängigkeit von einem der Ansprüche 11, 12 und 20 bis 25, das ferner das Auffordern des Benutzers zur Eingabe des Passwortes als Reaktion darauf beinhaltet, dass das bevorzugte BIR-Gerät (33) nicht verfügbar ist.

30. Verfahren nach einem der Ansprüche 1 bis 26, das ferner das Assoziieren der registrierten BIR-Daten mit einem Passwort beinhaltet.

31. Verfahren nach Anspruch 30, das ferner das Abrufen des Passwortes als Reaktion auf den Eingang der erfassten BIR-Daten beinhaltet.

32. Verfahren nach einem der vorherigen Ansprüche, das ferner beinhaltet, dem berechtigten Benutzer als Reaktion auf die Ermittlung einer Übereinstimmung zwischen den erfassten BIR-Daten und der gespeicherten Kopie der registrierten BIR-Daten Zugang zum Computer (20) zu gewähren.

33. Vorrichtung, die Folgendes umfasst: einen Speicher (36), eine in dem Speicher residente Datenbank (37), die Datenbank, die registrierte BIR-Daten speichert, die von einem Netzwerk (38) abgerufen wurden und mit einem berechtigten Benutzer korreliert sind, ein Programm (42, 44, 50), das so konfiguriert ist, dass es einen zugreifenden Benutzer auffordert, erfasste BIR-Daten in einen Computer (20) einzugeben, und den Computer (20) veranlasst, mit dem Netzwerk zu kommunizieren, und eine Beurteilung der erfassten BIR-Daten mit den registrierten BIR-Daten bewirkt, um zu ermitteln, ob einem zugreifenden Benutzer Zugang zum Netzwerk (38) als berechtigter Benutzer über den Computer (20) gewährt werden soll, **dadurch gekennzeichnet, dass** das Programm (42, 44, 50) so konfiguriert ist, dass, wenn dem zugreifenden Benutzer Zugang zum Netzwerk (38) als berechtigter Benutzer gewährt werden soll, danach eine Kopie der registrierten BIR-Daten in der Datenbank (37) zur späteren Verwendung in nachfolgenden Zugriffsversuchen gespeichert wird.

34. Vorrichtung nach Anspruch 33, wobei das Programm (42, 44, 50) das Abrufen der registrierten BIR-Daten aus dem Netzwerk (18) bewirkt.

35. Vorrichtung, die Folgendes umfasst: einen Speicher (32), eine in dem Speicher residente Datenbank, die Datenbank, die registrierte BIR-Daten speichert, die von einem Netzwerk (18) abgerufen wurden und mit einem berechtigten Benutzer korreliert sind, ein Programm (42, 44, 50), das so konfiguriert ist, dass es einen zugreifenden Benutzer auffordert, erfasste BIR-Daten in einen Computer (20) zu geben, und den Computer (20) veranlasst, mit dem Netzwerk zu kommunizieren, und eine Beurteilung der erfassten BIR-Daten mit den registrierten BIR-Daten bewirkt, um zu ermitteln, ob einem zugreifenden Benutzer Zugang zum Netzwerk (18) als berechtigter Benutzer über den Computer (20) gewährt werden soll, **dadurch gekennzeichnet, dass** das Programm (42, 44, 50) so konfiguriert ist, dass, wenn dem zugreifenden Benutzer Zugang zum Netzwerk (18) als berechtigter Benutzer gewährt werden soll, danach eine Kopie der registrierten BIR-Daten in dem Computer (20) zur späteren Benutzung in nachfolgenden Zugriffsversuchen gespeichert wird.

36. Vorrichtung nach einem der Ansprüche 33 bis 35, wobei das Programm (42, 44, 50) so konfiguriert ist, dass es nach dem Speichern der Kopie der registrierten BIR-Daten auf dem Computer (20) und danach, während der Computer (20) nicht mit dem Netzwerk (18) kommuniziert, den zugreifenden Benutzer ferner veranlasst, die erfassten BIR-Daten in den Computer (20) einzugeben, und eine Beurteilung der erfassten BIR-Daten und der gespeicherten Kopie der registrierten BIR-Daten bewirkt, um zu ermitteln, ob dem zugreifenden Benutzer Zugang zu dem Computer (20) als berechtigter Benutzer gewährt werden soll.

37. Vorrichtung nach Anspruch 36, wobei das Programm (42, 44, 50) das Speichern einer ID von wenigstens einem vorherigen Benutzer des Computers (20) auf dem Computer (20) bewirkt.

38. Vorrichtung nach Anspruch 37, wobei das Programm (42, 44, 50) das Speichern der Kopie der registrierten BIR-Daten auf eine solche Weise bewirkt, dass sie mit der auf dem Computer (20) gespeicherten ID assoziiert sind.

39. Vorrichtung nach Anspruch 37 oder Anspruch 38, wobei das Programm (42, 44, 50) das Anzeigen der ID dem zugreifenden Benutzer bewirkt.

40. Vorrichtung nach Anspruch 39, wobei das Programm (42, 44, 50) es dem zugreifenden Benutzer ermöglicht, die angezeigte ID auszuwählen.

41. Vorrichtung nach Anspruch 40, wobei das Programm (42, 44, 50) das Abrufen der Kopie der mit dem zugreifenden Benutzer assoziierten registrierten BIR-Daten als Reaktion auf die gewählte ID bewirkt.

42. Vorrichtung nach Anspruch 40 oder Anspruch 41, wobei das Programm das Assoziieren eines bevorzugten BIR-Gerätes (33) mit der gewählten ID bewirkt.

43. Vorrichtung nach Anspruch 42, wobei das Programm (42, 44, 50) das Assoziieren des bevorzugten BIR-Gerätes (33) mit dem zugreifenden Benutzer bewirkt.

44. Vorrichtung nach einem der Ansprüche 33 bis 35, wobei der zugreifende Benutzer zum Zugreifen auf das Netzwerk (18) normalerweise sowohl eine ID als auch die erfassten BIR-Daten in den Computer (20) eingeben muss, das Programm (42, 44, 50) den zugreifenden Benutzer nach dem Bewirken des Speicherns der registrierten BIR-Daten und nach einem nachfolgenden Versuch durch den zugreifenden Benutzer, Zugang über das Netzwerk (18) zu gewinnen, veranlasst, die erfassten BIR-Daten in den Computer (20) einzugeben, ohne die ID zu geben; und das Beurteilen der erfassten BIR-Daten anhand der gespeicherten registrierten BIR-Daten bewirkt, um zu ermitteln, ob dem zugreifenden Benutzer Zugang zu dem Computer (20) als berechtigter Benutzer gewährt werden soll.

45. Vorrichtung nach Anspruch 44, wobei das Programm (42, 44, 50) das Assoziieren der Kopie der registrierten BIR-Daten mit der ID bewirkt.

46. Vorrichtung nach Anspruch 45, wobei das Programm (42, 44, 50) das Abrufen der ID als Reaktion auf den Empfang der erfassten BIR-Daten bewirkt.

47. Vorrichtung nach einem der Ansprüche 44 bis 46, wobei das Programm (42, 44, 50) das Prüfen bewirkt, ob der Computer (20) so konfiguriert ist, dass er dem berechtigten Benutzer ohne Vorliegen der ID Zugang gewähren kann.

48. Vorrichtung nach einem der Ansprüche 44 bis 47, wobei das Programm (42, 44, 50) das Verschlüsseln der ID bewirkt.

49. Vorrichtung nach einem der Ansprüche 44 bis 48, wobei das Programm (42, 44, 50) das Speichern der ID des zugreifenden Benutzers zum späteren Abrufen bewirkt.

50. Vorrichtung nach einem der Ansprüche 44 bis 49, wobei das Programm (42, 44, 50) das Ermitteln eines bevorzugten biometrischen Registriergerätes (33) bewirkt.

51. Vorrichtung nach einem der Ansprüche 42, 43 und 50, wobei das bevorzugte biometrische Registriergerät (33) gemäß einer Maschineneinstellung bestimmt wird.

52. Vorrichtung nach einem der Ansprüche 42, 43 und 50, wobei das Programm (42, 44, 50) das Auswählen des bevorzugten BIR-Gerätes (33) gemäß einer Einstellung bewirkt, die ausgewählt ist aus einer Gruppe bestehend aus: Benutzer, Computer, global und einer Kombination davon.

53. Vorrichtung nach einem der Ansprüche 42, 43 sowie 50 bis 52, wobei das Programm (42, 44, 50) das Ermitteln bewirkt, ob das bevorzugte biometrische Registriergerät (33) auf dem Computer zur Verfügung steht.

54. Vorrichtung nach einem der Ansprüche 42, 43 und 50 bis 53, wobei das Programm (42, 44, 50) das Ermitteln bewirkt, ob der Computer (20) so konfiguriert ist, dass er Zugang zu dem bevorzugten biometrischen Registriergerät (33) ohne Vorliegen der ID gewährt.

55. Vorrichtung nach Anspruch 50 oder nach einem der Ansprüche 51 bis 54 in Abhängigkeit von Anspruch 50, wobei das Programm (42, 44, 50) den Benutzer veranlasst, die ID als Reaktion darauf zu geben, dass das bevorzugte biometrische Registriergerät (33) nicht zur Verfügung steht.

56. Vorrichtung nach einem der Ansprüche 42, 43 sowie 50 bis 55, wobei das Programm (42, 44, 50) das Ermitteln eines zweiten bevorzugten biometrischen Registriergerätes (33) bewirkt.

57. Vorrichtung nach Anspruch 33, wobei die Datenbank (36) eine mit den registrierten BIR-Daten assoziierte ID führt.

58. Vorrichtung nach einem der Ansprüche 33 bis 57, wobei das Programm das Speichern eines Passwortes von wenigstens einem vorherigen Benutzer des Computers (20) auf dem Computer (20) bewirkt.

59. Vorrichtung nach Anspruch 58, wobei das Programm (42, 44, 50) das Speichern der Kopie der registrierten BIR-Daten auf eine solche Weise bewirkt, dass sie mit dem auf dem Computer (20) gespeicherten Passwort assoziiert sind.

60. Vorrichtung nach einem der Ansprüche 33 bis 57, wobei die Datenbank (36) ein mit den registrierten BIR-Daten assoziiertes Passwort führt.

61. Vorrichtung nach einem der Ansprüche 33 bis 57, wobei das Programm (42, 44, 50) das Assoziieren der registrierten BIR-Daten mit einem Passwort bewirkt.

62. Vorrichtung nach Anspruch 61, wobei das Programm (42, 44, 50) das Abrufen des Passwortes als Reaktion auf den Eingang der erfassten BIR-Daten bewirkt.

63. Vorrichtung nach einem der Ansprüche 60 bis 62 in Abhängigkeit von einem der Ansprüche 42, 43 sowie 50 bis 56, wobei das Programm (42, 44, 50) den Benutzer auffordert, das Passwort als Reaktion darauf einzugeben, dass das bevorzugte BIR-Gerät (33) nicht zur Verfügung steht.

64. Vorrichtung nach einem der Ansprüche 33 bis 63, wobei das Programm (42, 44, 50) bewirkt, dass dem Benutzer Zugang als Reaktion auf die Ermittlung einer Übereinstimmung zwischen den erfassten BIR-Daten und der gespeicherten Kopie der registrierten BIR-Daten gewährt wird.

65. Programmprodukt, das Folgendes umfasst: ein Programm (42, 44 50), das so konfiguriert ist, dass es einen zugreifenden Benutzer auffordert, erfasste BIR-Daten in einen Computer (30) einzugeben, wobei ein Speicher (32) des Computers (30) registrierte BIR-Daten speichert, die von einem Netzwerk (38) abgerufen wurden und mit einem berechtigten Benutzer korreliert sind, und den Computer (30) veranlasst, mit dem Netzwerk (38) zu kommunizieren, und ferner eine Beurteilung der erfassten BIR-Daten mit den registrierten BIR-Daten zu bewirken, um zu bestimmen, ob einem zugreifenden Benutzer Zugang zu dem Netzwerk (38) als berechtigter Benutzer über den Computer (30) gewährt werden soll, und ein das Programm (42, 44, 50) führendes Signalführungsmedium, **dadurch gekennzeichnet, dass** das Programm (42, 44, 50) so konfiguriert ist, dass, wenn dem zugreifenden Benutzer Zugang zum Netzwerk (38) als berechtigter Benutzer gewährt werden soll, danach eine Kopie der registrierten BIR-Daten im Speicher (32) des Computers (30) zur späteren Benutzung in nachfolgenden Zugriffsversuchen gespeichert wird.

66. Programmprodukt nach Anspruch 65, wobei das Signalführungsmedium ein Aufzeichnungsmedium und/oder ein Übertragungsmedium beinhaltet.

## Revendications

1. Procédé de commande biométrique de l'accès d'un utilisateur à un ordinateur (20, 30) adapté pour communiquer avec un réseau (18) comptant au moins un serveur (16) associé, comprenant : la mémorisation au niveau du serveur (16) de données de BIR (enregistrement d'identification biométrique) d'enrôlement mises en corrélation avec un utilisateur privilégié ; l'incitation d'un utilisateur demandant l'accès à fournir des données de BIR capturées à l'ordinateur (20) et l'incitation de l'ordinateur (20) à communiquer avec le serveur (16) par l'intermédiaire du réseau (18), et l'évaluation des données de BIR capturées avec les données de BIR d'enrôlement afin de déterminer si l'utilisateur demandant l'accès doit être autorisé à accéder au réseau (18) comme utilisateur privilégié par l'intermédiaire de l'ordinateur (20), **caractérisé en ce que** si l'utilisateur demandant l'accès est autorisé à accéder au réseau (18) comme utilisateur privilégié, une copie des données de BIR d'enrôlement est alors mémorisée dans l'ordinateur (20) en vue de leur utilisation ultérieure lors de tentatives d'accès ultérieures.

2. Procédé selon la revendication 1, comprenant en outre le recouvrement du BIR d'enrôlement à partir du serveur.

3. Procédé selon la revendication 1 ou la revendication 2, comprenant en outre le cryptage des données de BIR d'enrôlement au niveau de l'ordinateur (20).

4. Procédé selon la revendication 1 ou la revendication 2, comprenant en outre le cryptage des données de BIR d'enrôlement au niveau du serveur (16).

5. Procédé selon l'une quelconque des revendications précédentes, comprenant en outre après la mémorisation de la copie des données de BIR d'enrôlement au niveau de l'ordinateur (20), et après cela, pendant que l'ordinateur ne communique pas avec le réseau (18), l'incitation de l'utilisateur demandant l'accès à fournir des données de BIR capturées à l'ordinateur (20), et l'évaluation des données de BIR capturées et de la copie mémorisée des données de BIR d'enrôlement afin de déterminer si l'utilisateur demandant l'accès doit être autorisé à accéder à l'ordinateur (20) comme utilisateur privilégié.

6. Procédé selon la revendication 5, comprenant en outre la mémorisation au niveau de l'ordinateur (20) d'une ID d'au moins un utilisateur précédent de l'ordinateur (20).

7. Procédé selon la revendication 6, comprenant en outre la mémorisation des données de BIR d'enrôlement de façon à ce qu'elles soient associées à l'ID mémorisée sur l'ordinateur (20).

8. Procédé selon la revendication 6 ou la revendication 7, comprenant en outre l'affichage de l'ID à l'utilisateur demandant l'accès.

9. Procédé selon la revendication 8, comprenant en outre l'autorisation de l'utilisateur demandant l'accès à sélectionner l'ID affichée.

10. Procédé selon la revendication 9, comprenant en outre le recouvrement des données de BIR d'enrôlement associées à l'utilisateur demandant l'accès en réponse à l'ID sélectionnée.

11. Procédé selon la revendication 9 ou 10, comprenant en outre l'association d'un dispositif de BIR préféré (33) à l'ID sélectionnée.

12. Procédé selon la revendication 11, comprenant en outre l'association du dispositif de BIR préféré (33) à l'utilisateur demandant l'accès.

13. Procédé selon l'une quelconque des revendications 1 à 5, dans lequel l'utilisateur demandant l'accès doit fournir au niveau de l'ordinateur (20) une ID et les données de BIR capturées afin d'accéder au réseau (18), comprenant en outre après la mémorisation de la copie des données de BIR d'enrôlement, lors d'une tentative ultérieure par l'utilisateur demandant l'accès pour obtenir l'accès par l'intermédiaire du réseau (18), l'incitation de l'utilisateur demandant l'accès à fournir les données de BIR capturées à l'ordinateur (20) sans fournir l'ID, et l'évaluation des données de BIR capturées par rapport aux données de BIR d'enrôlement mémorisées afin de déterminer si l'utilisateur demandant l'accès doit être autorisé à accéder à l'ordinateur (20) comme utilisateur privilégié.

14. Procédé selon la revendication 13, comprenant en outre l'autorisation de l'accès par l'utilisateur à des informations recouvrables par l'intermédiaire de l'ordinateur en réponse à la détermination d'une correspondance entre les données de BIR capturées et la copie mémorisée des données de BIR d'enrôlement.

15. Procédé selon la revendication 13 ou la revendication 14, comprenant en outre l'association des données de BIR d'enrôlement à l'ID.

16. Procédé selon la revendication 15, comprenant en outre le recouvrement de l'ID en réponse à la réception des données de BIR capturées.

17. Procédé selon l'une quelconque des revendications 13 à 16, comprenant en outre la vérification que l'ordinateur (20) est configuré pour autoriser l'accès par l'utilisateur privilégié sans l'ID.

18. Procédé selon l'une quelconque des revendications 13 à 17, comprenant en outre le brouillage de l'ID.

19. Procédé selon l'une quelconque des revendications 13 à 18, comprenant en outre la mémorisation de l'ID de l'utilisateur demandant l'accès pour un rappel ultérieur.

20. Procédé selon l'une quelconque des revendications 13 à 19, comprenant en outre la détermination d'un dispositif d'enrôlement biométrique préféré (33).

21. Procédé selon l'une quelconque des revendications 11, 12 et 20, comprenant en outre la sélection du dispositif de BIR préféré (33) conformément à un réglage sélectionné dans un groupe consistant en :
utilisateur, ordinateur, global et une quelconque combinaison de ceux-ci.

22. Procédé selon l'une quelconque des revendications 11, 12 et 20, dans lequel le dispositif d'enrôlement biométrique (33) est déterminé conformément à un réglage machine.

23. Procédé selon l'une quelconque des revendications 11, 12 et 20 à 22, comprenant en outre la vérification de la disponibilité du dispositif de BIR préféré (33) sur l'ordinateur (20).

24. Procédé selon l'une quelconque des revendications 11, 12 et 20 à 23, comprenant en outre la détermination si l'ordinateur (20) est configuré pour consentir l'accès en utilisant le dispositif d'enrôlement biométrique préféré (33) sans l'ID.

25. Procédé selon la revendication 24, dépendant de la revendication 20, comprenant en outre l'incitation de l'utilisateur à fournir l'ID en réponse au fait que le dispositif d'enrôlement biométrique préféré (33) n'est pas disponible.

26. Procédé selon l'une quelconque des revendications 11, 12 et 20 à 25, comprenant en outre la détermination d'un second dispositif d'enrôlement biométrique préféré (33).

27. Procédé selon l'une quelconque des revendications 5 à 26, comprenant en outre la mémorisation au niveau de l'ordinateur (20) d'un mot de passe d'au moins un utilisateur précédent de l'ordinateur (20).

28. Procédé selon la revendication 27, comprenant en outre la mémorisation des données de BIR d'enrôlement de façon à ce qu'elles soient associées au mot de passe mémorisé sur l'ordinateur (20).

29. Procédé selon la revendication 27 ou la revendication 28, dépendant de l'une quelconque des revendications 11, 12 et 20 à 25, comprenant en outre l'incitation de l'utilisateur à saisir le mot de passe en réponse au fait que le dispositif de BIR préféré (33) n'est pas disponible.

30. Procédé selon l'une quelconque des revendications 1 à 26, comprenant en outre l'association des données de BIR d'enrôlement à un mot de passe.

31. Procédé selon la revendication 30, comprenant en outre le recouvrement du mot de passe en réponse à la réception des données de BIR capturées.

32. Procédé selon l'une quelconque des revendications précédentes, comprenant en outre l'autorisation de l'accès par l'utilisateur privilégié à l'ordinateur (20) en réponse à la détermination d'une correspondance entre les données de BIR capturées et la copie mémorisée des données de BIR d'enrôlement.

33. Appareil comprenant une mémoire (6), une base de données (37) résidant dans la mémoire, la base de données mémorisant des données de BIR d'enrôlement recouvrées à partir d'un réseau (38) et mises en corrélation avec un utilisateur privilégié, un programme (42, 44, 50) configuré pour inciter un utilisateur demandant l'accès à fournir des données de BIR capturées à un ordinateur (20) et l'ordinateur (20) à communiquer avec le réseau, et pour lancer une évaluation des données de BIR capturées avec les données de BIR d'enrôlement afin de déterminer si un utilisateur demandant l'accès doit être autorisé à accéder au réseau (38) comme utilisateur privilégié par l'intermédiaire de l'ordinateur (20), **caractérisé en ce que** le programme (42, 44, 50) est configuré de telle sorte que si l'utilisateur demandant l'accès est autorisé à accéder au réseau (38) comme utilisateur privilégié, une copie des données de BIR d'enrôlement est alors mémorisée dans la base de données (37) en vue de leur utilisation ultérieure lors de tentatives d'accès ultérieures.

34. Appareil selon la revendication 33, dans lequel le programme (42, 44, 50) lance le recouvrement du BIR d'enrôlement à partir du réseau (18).

35. Appareil comprenant une mémoire (32), une base de données résidant dans la mémoire, la base de données mémorisant des données de BIR d'enrôlement recouvrées à partir d'un réseau (18) et mises en corrélation avec un utilisateur privilégié, un programme (42, 44, 50) configuré pour inciter un utilisateur demandant l'accès à fournir des données de BIR capturées à un ordinateur (20) et l'ordinateur (20) à communiquer avec le réseau, et pour lancer une évaluation des données de BIR capturées avec les données de BIR d'enrôlement afin de déterminer si un utilisateur demandant l'accès doit être autorisé à accéder au réseau (18) comme utilisateur privilégié par l'intermédiaire de l'ordinateur (20), **caractérisé en ce que** le programme (42, 44, 50) est configuré de telle sorte que si l'utilisateur demandant l'accès doit être autorisé à accéder au réseau (18) comme utilisateur privilégié, une copie des données de BIR d'enrôlement est alors mémorisée dans l'ordinateur (20) en vue de leur utilisation ultérieure lors de tentatives d'accès ultérieures.

36. Appareil selon l'une quelconque des revendications 33 à 35, dans lequel le programme (42, 44, 50) est configuré de telle sorte qu'après la mémorisation de la copie des données de BIR d'enrôlement au niveau de l'ordinateur (20), et après cela, pendant que l'ordinateur (20) ne communique pas avec le réseau (18), le programme (42, 44, 50) incite en outre l'utilisateur demandant l'accès à fournir des données de BIR capturées à l'ordinateur (20) et lance l'évaluation des données de BIR capturées et de la copie mémorisée des données de BIR d'enrôlement afin de déterminer si l'utilisateur demandant l'accès doit être autorisé à accéder à l'ordinateur (20) comme utilisateur privilégié.

37. Appareil selon la revendication 36, dans lequel le programme (42, 44, 50) lance la mémorisation au niveau de l'ordinateur (20) d'une ID d'au moins un utilisateur précédent de l'ordinateur (20).

38. Appareil selon la revendication 37, dans lequel le programme (42, 44, 50) lance la mémorisation de la copie des données de BIR d'enrôlement de façon à ce qu'elles soient associées à l'ID mémorisée sur l'ordinateur (20).

39. Appareil selon la revendication 37 ou la revendication 38, dans lequel le programme (42, 44, 50) lance l'affichage de l'ID à l'utilisateur demandant l'accès.

40. Appareil selon la revendication 39, dans lequel le programme (42, 44, 50) permet à l'utilisateur demandant l'accès de sélectionner l'ID affichée.

41. Appareil selon la revendication 40, dans lequel le programme (42, 44, 50) lance le recouvrement des données de BIR d'enrôlement associées à l'utilisateur demandant l'accès en réponse à l'ID sélectionnée.

42. Appareil selon la revendication 40 ou la revendication 41, dans lequel le programme lance l'association d'un dispositif de BIR préféré (33) à l'ID sélectionnée.

43. Appareil selon la revendication 42, dans lequel le programme (42, 44, 50) lance l'association du dispositif de BIR préféré (33) à l'utilisateur demandant l'accès.

44. Appareil selon l'une quelconque des revendications 33 à 35, dans lequel l'utilisateur demandant l'accès doit fournir au niveau de l'ordinateur (20) une ID et les données de BIR capturées afin d'accéder au réseau (18), après le lancement de la mémorisation des données de BIR d'enrôlement et lors d'une tentative ultérieure par l'utilisateur demandant l'accès pour obtenir l'accès par l'intermédiaire du réseau (18), le programme (42, 44, 50) incite l'utilisateur demandant l'accès à fournir les données de BIR capturées à l'ordinateur (20) sans fournir l'ID ; et lance l'évaluation des données de BIR capturées par rapport aux données de BIR d'enrôlement mémorisées afin de déterminer si l'utilisateur demandant l'accès doit être autorisé à accéder à l'ordinateur (20) comme utilisateur privilégié.

45. Appareil selon la revendication 44, dans lequel le programme (42, 44, 50) lance l'association de la copie des données de BIR d'enrôlement à l'ID.

46. Appareil selon la revendication 45, dans lequel le programme (42, 44, 50) lance le recouvrement de l'ID en réponse à la réception des données de BIR capturées.

47. Appareil selon l'une quelconque des revendications 44 à 46, dans lequel le programme (42, 44, 50) lance la vérification que l'ordinateur (20) est configuré pour autoriser l'accès par l'utilisateur privilégié sans l'ID.

48. Appareil selon l'une quelconque des revendications 44 à 47, dans lequel le programme (42, 44, 50) lance le cryptage de l'ID.

49. Appareil selon l'une quelconque des revendications 44 à 48, dans lequel le programme (42, 44, 50) lance la mémorisation de l'ID de l'utilisateur demandant l'accès pour un rappel ultérieur.

50. Appareil selon l'une quelconque des revendications 44 à 49, dans lequel le programme (42, 44, 50) lance la détermination d'un dispositif d'enrôlement biométrique préféré (33).

51. Appareil selon l'une quelconque des revendications 42, 43 et 50, dans lequel le dispositif d'enrôlement biométrique préféré (33) est déterminé conformément à un réglage machine.

52. Appareil selon l'une quelconque des revendications 42, 43 et 50, dans lequel le programme (42, 44, 50) lance la sélection du dispositif de BIR préféré (33) conformément à un réglage sélectionné dans un groupe consistant en : utilisateur, ordinateur, global et une quelconque combinaison de ceux-ci.

53. Appareil selon l'une quelconque des revendications 42, 43 et 50 à 52, dans lequel le programme (42, 44, 50) lance la détermination si le dispositif d'enrôlement biométrique (33) préféré est disponible ou non sur l'ordinateur.

54. Appareil selon l'une quelconque des revendications 42, 43 et 50 à 53, dans lequel le programme (42, 44, 50) lance la détermination si l'ordinateur (20) est configuré pour autoriser l'accès en utilisant le dispositif d'enrôlement biométrique préféré (33) sans l'ID.

55. Appareil selon la revendication 50 ou l'une quelconque des revendications 51 à 54 dépendant de la revendication 50, dans lequel le programme (42, 44, 50) lance l'incitation de l'utilisateur à fournir l'ID en réponse au fait que le dispositif d'enrôlement biométrique préféré (33) n'est pas disponible.

56. Appareil selon l'une quelconque des revendications 42, 43 et 50 à 55, dans lequel le programme (42, 44, 50) lance la détermination d'un second dispositif d'enrôlement biométrique préféré (33).

57. Appareil selon la revendication 33, dans lequel la base de données (36) tient à jour une ID associée aux données de BIR d'enrôlement.

58. Appareil selon l'une quelconque des revendications 33 à 57, dans lequel le programme (42, 44, 50) lance la mémorisation au niveau de l'ordinateur (20) d'un mot de passe d'au moins un utilisateur précédent de l'ordinateur (20).

59. Appareil selon la revendication 58, dans lequel le programme (42, 44, 50) lance la mémorisation de la copie des données de BIR d'enrôlement de façon à ce qu'elles soient associées au mot de passe mémorisé sur l'ordinateur (20).

60. Appareil selon l'une quelconque des revendications 33 à 57, dans lequel la base de données (36) tient à jour un mot de passe associé aux données de BIR d'enrôlement.

61. Appareil selon l'une quelconque des revendications 33 à 57, dans lequel le programme (42, 44, 50) lance l'association des données de BIR d'enrôlement à un mot de passe.

62. Appareil selon la revendication 61, dans lequel le programme (42, 44, 50) lance le recouvrement du mot de passe en réponse à la réception des données de BIR capturées.

63. Appareil selon l'une quelconque des revendications 30 à 62, dépendant de l'une quelconque des revendications 42, 43 et 50 à 56, dans lequel le programme (42, 44, 50) lance l'incitation de l'utilisateur à saisir le mot de passe en réponse au fait que le dispositif de BIR préféré (33) n'est pas disponible.

64. Appareil selon l'une quelconque des revendications 33 à 63, dans lequel le programme (42, 44, 50) lance l'autorisation de l'accès par l'utilisateur en réponse à la détermination d'une correspondance entre les données de BIR capturées et la copie mémorisée des données de BIR d'enrôlement.

65. Produit de programme, comprenant un programme (42, 44, 50) configuré pour inciter un utilisateur demandant l'accès à fournir des données de BIR capturées à un ordinateur (30), dans lequel une mémoire (32) de l'ordinateur (30) mémorise des données de BIR d'enrôlement recouvrées à partir d'un réseau (38) et mises en corrélation avec un utilisateur privilégié, et pour inciter l'ordinateur (30) à communiquer avec le réseau (38), et en outre pour lancer une évaluation des données de BIR capturées avec les données de BIR d'enrôlement afin de déterminer si un utilisateur demandant l'accès doit être autorisé à accéder au réseau (38) comme utilisateur privilégié par l'intermédiaire de l'ordinateur (30), et un support porteur de signal portant le programme (42, 44, 50), **caractérisé en ce que** le programme (42, 44, 50) est configuré de telle sorte que si l'utilisateur demandant l'accès est autorisé à accéder au réseau (38) comme utilisateur privilégié, une copie des données de BIR d'enrôlement est alors mémorisée dans la mémoire (32) de l'ordinateur (40) en vue de leur utilisation ultérieure lors de tentatives d'accès ultérieures.

66. Produit de programme selon la revendication 65, dans lequel le support porteur de signal comporte au moins un support enregistrable et un support de transmission.
